# EUROPEAN PATENT SPECIFICATION

(11) **EP 3 801 974 B1**
(45) Date of publication and mention of the grant of the patent: **21.08.2024**
(21) Application number: 19726904.6
(22) Date of filing: 23.05.2019
(51) Int. Cl.: B23K 26/08, B08B 7/00, B41F 35/00, B23K 26/352, B23K 26/0622

(54) **CLEANING APPARATUS AND METHOD FOR LASER CLEANING OF A ANILOX ROLLER**
REINIGUNGSVORRICHTUNG UND -VERFAHREN FÜR DIE LASERREINIGUNG EINER ANILOXWALZE
APPAREIL ET MÉTHODE DE NETTOYAGE AU LASER D'UN ROULEAU ANILOX

(30) Priority: 25.05.2018 DK PA201800236
(43) Date of publication of application: 14.04.2021
(73) Proprietor: Flexo Wash ApS, 8541 Skødstrup (DK)
(72) Inventor: KONGSTAD, Anders Conradsen, 8541 Skødstrup (DK)
(74) Representative: Patrade A/S
(86) International application number: PCT/DK2019/050164
(87) International publication number: WO 2019/223844

(56) References cited:
- EP-A1- 1 621 263
- FR-A1- 2 760 403
- US-A1- 2009 020 137
- US-B2- 6 555 781

## Description

The present invention relates to a cleaning apparatus for laser cleaning of an anilox roller and a method for laser cleaning from an anilox roller.

### Background of the Invention

At present there are various cleaning apparatuses, which utilises lasers for cleaning printing plates. The laser cleaning of printing plates is a dry-process and this is an advantage compared to other competing cleaning apparatuses, which cleans the printing plates by washing the printing plates in solvents. The solvents are difficult to handle and they are typically toxic to the environment.

A typically laser cleaner for cleaning printing plates focuses a nanosecond laser pulse or a CW laser onto the printing plate, which printing plate is slowly rotated while the laser beam is moved along the longitudinal axis of the printing plate. Commercial available laser cleaners have a laser power of 25 W. The laser cleaner cleans the printing plate by evaporating the ink.

However, there is a risk of damaging the surface structure of the printing plate if the laser intensity exceeds a threshold value or if the ink absorbance is higher than expected thereby leading to a higher temperature.

This incites a skilled person to use two or more lasers having a lower output power cleaning different areas of the printing plate, thus cleaning faster by increasing the effective beam size.

At present laser cleaners are slower compared to washing the printing plates in solvents with a risk of damaging the printing plates. The cleaning speed can be increased by utilising two or more lasers, but this is yet to be adopted by the industry.

Furthermore, even if the laser intensity is below the threshold value, the laser treatment deteriorates the printing plate over time.

Thus, there is a need for a dry-process capable of cleaning the printing plates faster than present day dry-processes and there is a need for decreasing the risk of damaging the printing plates.

EP1621263 (on which the preamble of claim 8 is based) describes an apparatus for removing paper pulp from roller using laser pulses. EP1621263 does not describe cleaning ink of anilox rollers.

### Object of the Invention

It is an object of the invention to provide a cleaning apparatus for laser cleaning capable of cleaning printing plates while limiting the deterioration of the printing plate.

It is an object of the invention to provide a cleaning apparatus for laser cleaning capable of cleaning faster than the prior art.

It is an object of the invention to provide a method for laser cleaning a printing plate.

### Description of the Invention

An object of the invention is achieved by a method according to claim 1.

The anilox roller shall in this application be understood as a printing plate for delivering ink in a printing process. According to the invention the printing plate is an anilox roller.

Printing plate shall in this application be understood as the part of an inking system which collects ink from a fountain such as a fountain roller or an ink fountain and deliver that ink to the next part in the inking system.

The method comprises acts of generating picosecond laser pulses and guiding the laser pulses onto a path on the printing plate.

The picosecond laser pulses may be generated by any pulsed laser capable of generating picosecond laser pulses.

A picosecond laser pulse should be understood as a laser pulse having pulse duration between 1-1000 ps.

An experiment has surprisingly showed that the selectively of the laser pulse between the ink and the printing plate increases greatly with the inverse of pulse duration.

In a first experiment, the cleaning efficiency of a picosecond laser was tested by cleaning a printing plate in the form of an anilox roller. The picosecond was surprisingly able to clean the anilox roller using only an average power of 90 mW while present day nanosecond lasers has an average power of 25 W. Thus, the picosecond laser is able to clean an anilox roller using only 0.36 % of present day laser cleaners for anilox rollers.

Furthermore, the picosecond laser pulses were surprisingly able to ablate ink from the surface of the printing plate without damaging the surface structure of the printing plate. The picosecond laser pulses did not induce cracks.

Figs. 4-8 discloses SEM images of the surface of an anilox roller with and without ink. Fig. 4 illustrates samples before laser treatment. Fig. 5 and 6 illustrate the surface after laser cleaning by nanosecond laser pulses. Fig. 7 and 8 illustrates the surface after laser cleaning by picosecond laser pulses.

Fig. 5 clearly shows and an increase of cracks to the surface of the anilox roller and the SEM images show signs of melting. The signs of melting were most evident in the anlox roller with black ink.

Fig. 6 shows anilox roller surfaces being subjected to 100 passes of picosecond laser pulses and the surfaces show neither signs of induced cracks nor signs of melted surfaces.

The method may comprise an act of generating the picosecond laser pulses with pulse duration between 25-200 ps.

The method may comprise an act of generating the picosecond laser pulses with pulse duration between 25-100 ps.

The method may comprise an act of generating the picosecond laser pulses with pulse duration of about 50 ps.

Initial trials have shown an increase selectivity of the picosecond laser pulses as the duration is towards 50 ps.

The pulse duration may be between 1-800 ps, 1-500 ps, 1-250 ps, 1-100 ps, 1-50 ps or 1-10 ps.

The pulse duration may preferably be 1-250 ps.

The pulse duration may more preferably be 1-100 ps.

The low average power of the laser decreases the risk of cracking due to thermal expansion as the surface temperature of the printing plate almost does not change.

Experiments were conducted for comparing the surface structure of anilox rollers treated by nanosecond laser pulses and picosecond laser pulses. At a first instance the surface was characterised using white light interferometry (WLI) and optical microscope, however WLI and the optical microscope did not show any clear difference between the areas treated by ns laser pulses and ps laser pulses.

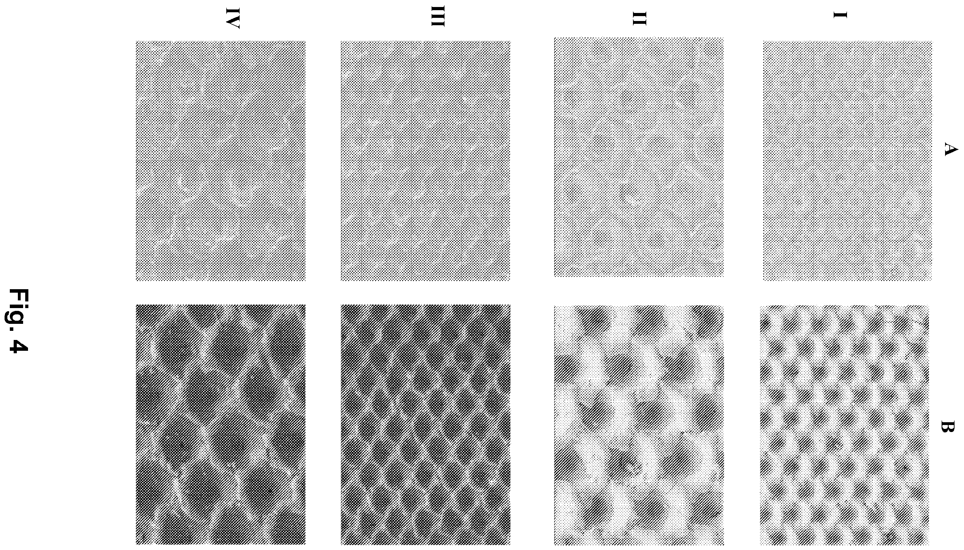

In a second instance the surface was characterised using scanning electron microscopy, see Fig. 4-6 and the corresponding figure description. The SEM images showed that the surface treated by the nanosecond pulses caused a loss of geometry of the pockets, which will possible affect the performance of ink delivery. The SEM images surprisingly showed that the surface treated by the picosecond pulses showed no sign of a loss of geometry of the pockets and it showed more dimples at the bottom of the structure meaning the cleaning process remove the material across the 10 micrometer depth of the structure restoring the surface to the original shape, thereby increasing the ink transfer volume.

Thus, laser cleaning using picosecond laser pulses is able to clean the anilox roller better than nanosecond laser pulses or solvents. It is expected that this will increase the lifetime of the anilox rollers significantly.

In an aspect the method may generate the laser pulses with a pulse wavelength between 800-1200 nm.

The laser pulses may be generated with a pulse wavelength of 1064 nm.

Experiments show that the infrared wavelengths can be used to clean anilox rollers without damaging the surface of the anilox rollers.

In an aspect the method may further comprise an act of generating the laser pulses with a repetition rate between 1-180 kHz, 10-180 kHz, 20-120 kHz, 40-80 kHz or 40-60kHz.

The method will be able to clean the printing plates faster with increasing repetition rate as the laser pulses are able to cover a larger area.

The infrared picosecond pulsed laser may be Hylase-25 W from NKT photonics, which is capable of producing pulses with a repetition rate of 50 kHz. The repetition rate is so fast that the limiting cleaning factor becomes the movement of the printing plate relative to the laser spot.

In an aspect the method may further comprise an act of guiding the laser pulses with a path speed of 5-5000 mm/s, 50-4000 mm/s, 500-3000 mm/s, 1000-2500 mm/s or 2000 mm/s.

The laser pulses may be guided by an optical system.

Experiments show good results when the path speed, repetition rate is adjusted such that there is a 20 % overlap.

In an aspect the method may further comprise an act of adjusting the laser pulses to an average intensity between 500-3600 W/m² on the printing plate.

The average intensity is the intensity integrated over a second.

The act of adjusting may be performed using an optical system.

As an example, an anilox roller was cleaned using the Hylase-25 W from NKT photonics. The laser pulses had a wavelength of 1064 nm, a pulse duration of about 10 ps, the repetition rate was 50 kHz. The spot size of the laser on the anilox roller was 50 *µm*, the average power was only 90 mW and the anilox roller was scanned with a path speed of 2000 mm/s resulting in a 20 % overlap between pulses.

In an aspect the path may pass each surface area of the printing plate two or more times. Experiments have shown that this enables the laser pulses to clean the surface without damaging the anilox roller.

In an aspect the method may further comprise an act of rotating the printing plate. The skilled person would know how to rotate the printing plate as there are several solution available.

The rotation of the printing plate simplifies the method as the laser pulses because the laser pulses may just scan a simple line along the printing plate as the rotation ensures that the surface area of the printing plate is covered and that it can be covered multiple times.

When a laser system capable of generating laser pulses with a repetition rate of above 10 kHz is used, then the rotation speed begins to be the limiting factor for cleaning the printing plate, thus there is a direct correlation between rotation speed and cleaning time.

An object of the invention is achieved by a cleaning apparatus for cleaning printing plates. The cleaning apparatus comprises a laser arrangement, which comprises a pulsed laser for generating picoseond laser pulses.

The picosecond laser pulses may have a pulse duration between 25-200 ps.

The picosecond laser pulses may have a pulse duration between 25-100 ps.

The picosecond laser pulses may have a pulse duration between 50 ps.

Initial trials have shown an increase selectivity of the picosecond laser pulses as the duration is towards 50 ps.

In an embodiment the pulse duration may be between 1-800 ps, 1-500 ps, 1-250 ps, 1-100 ps, 1-50 ps or 1-10 ps.

The cleaning apparatus may further comprise laser guidance means for guiding the laser pulses onto a path on a printing plate.

In an aspect the pulsed laser may generate laser pulses having a wavelength of 800-1200 nm.

In an aspect the pulsed laser may generate the laser pulses with a repetition rate between 1-180 kHz, 10-180 kHz, 20-120 kHz, 40-80 kHz or 40-60kHz.

In an aspect the laser guidance may be adapted for guiding the laser pulses with a path speed of 5-5000 mm/s, 50-4000 mm/s, 500-3000 mm/s, 1000-2500 mm/s or 2000 mm/s.

The path speed may be controlled using optics.

The path speed can be controlled by rotating the printing plate. The skilled person would know how to rotate the printing plate.

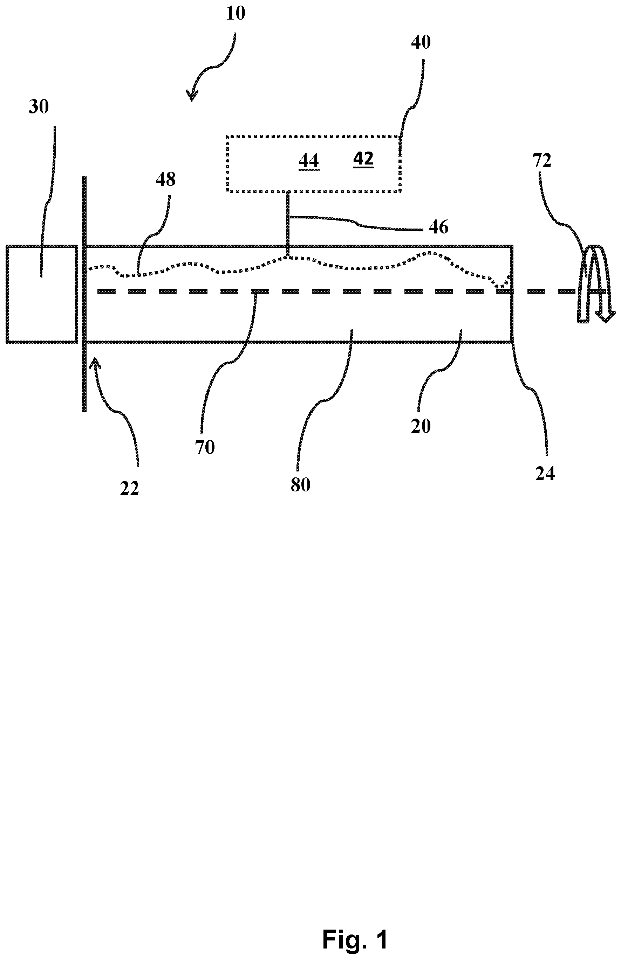

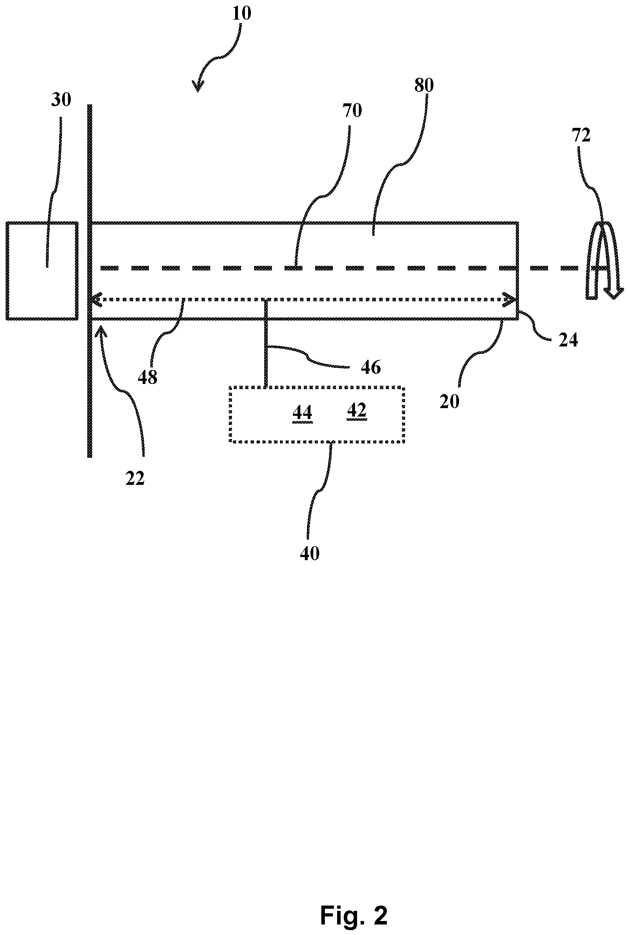

Fig. 1 and 2 discloses two peculiar ways to rotate the printing plate.

The path speed may be controlled using optics and rotating the printing plate.

In an aspect the method may further comprise an act of adjusting the laser pulses to an average intensity between 500-3600 W/m² on the printing plate.

In an aspect the cleaning apparatus may comprises a shaft extending substantially horizontal about an axis. The shaft may be configured for receiving and supporting a printing plate during operation. The shaft may be rotatably supported at a support end and may be connected to a drive for a rotation about the axis in a rotational direction. The shaft may have an opposite end that is free for receiving a printing plate along the axis.

The shaft has a strong connection with the printing plate, which enables that the printing plate may be rotated faster compared to other cleaning systems, where the printing plate is rotated by bearings at each end of the printing plate or along the printing plate. The increased rotational speed enables a larger path speed as the repetition rate of pulsed lasers is so high that the rotation speed of the printing plate becomes the limiting factor. Thus, the shaft enables faster cleaning.

In an aspect the cleaning apparatus may comprise a controller having means adapted to execute the acts of the method.

An object is achieved by computer program comprising instructions to cause the cleaning apparatus to execute the acts of the method.

An object is achieved by a computer-readable medium having stored thereon the computer program.

An object is achieved by the use of picosecond laser pulses according to claim 18.

The laser pulses may have pulse duration of 1-800 ps, 1-500 ps, 1-250 ps, 1-100 ps, 1-50 ps or 1-10 ps.

An object of the invention is achieved by a method of laser cleaning a printing plate in a cleaning apparatus.

The method comprises acts of rotating a shaft at a support end, the shaft extends substantially horizontal about an axis and the shaft is configured for receiving and supporting the printing plate during operation. There may be an act of generating a laser beam at a laser. There may be an act of guiding the laser beam by laser guidance means onto a path on the printing plate during operation.

The printing plate and the shaft are interlocked, such that they rotate as one body.

This enables the printing plate to be rotated at a higher speed compared to the prior art, thus enabling the laser to have a higher average power without damaging the printing plate. Thereby the printing plate may be cleaned faster compared to the prior art.

The method may further comprise one or more acts of receiving printing plate data. There may be an act of receiving laser arrangement data about the laser and the laser guidance means. There may be an act of calculating the path based on the printing plate data and the laser arrangement data.

The printing plate data may comprise physical data such as the length, weight and radius of the printing plate and/or material and/or absorption spectrum.

The physical data may at first be used to determine the maximum rotation speed.

The printing plate data may comprise data on the ink adhered to the surface of the printing plate such as absorption spectrum.

The data of the absorption spectrums of the printing plate and ink may be used to determine the most optimum wavelength(s) for laser cleaning the printing plate. As an example if the printing plate has a small absorption of a wavelength, while they ink has a strong absorption, then that wavelength is a good starting point for cleaning the printing plate.

The printing plate data may comprise laser threshold values. A laser threshold value could be at which average intensities the printing plate will be damage or at which peak intensities the printing plate will be damage. The skilled person would know that these threshold values are wavelength dependent.

The laser arrangement data may comprise data about laser type, emitted wavelength(s), power output, pulse duration, repetition rate, beam size and/or beam shape.

The laser arrangement data may comprise data about the laser guidance means such as focal lengths and/or how and how fast the guidance means can be moved.

The path may be calculated using the printing plate data and the laser arrangement data.

The optimal path can be determined by combining at least the laser threshold values and the characteristics of the laser beam and the laser guidance means. The optimal path may be disjoint and it may pass the same part of the printing plate more than once.

The laser beam characteristics may change at each pass as it has been observed, that the pulse duration should decrease as material is removed from the surface of the printing plate. Thus, the path may also include information about the laser output along the path.

Furthermore, the cleaning time can be determined by combining the maximum rotation speed, laser threshold values and the characteristics of the laser beam and laser guidance means.

After the calculation of the optimal path, the laser guidance means will guide the laser beam onto a path on the printing plate during operation. The calculation of the optimal path and the control of the laser and laser guidance means may be performed by a controller being part of the laser cleaning apparatus.

Furthermore, the laser output may change between each passage to accommodate that the surface characteristics of the printing plate change as material is removed. If the laser is pulsed, the peak intensity may be changed by changing pulse energy or pulse duration or both. The frequency spectrum may be changed by using a different laser or a different combination of lasers.

The method may further comprise acts of determining with angular measuring means an angular velocity of the shaft. There may be an act of controlling the laser arrangement based on the angular velocity of the shaft.

There is a direct correlation between the angular velocity of the shaft and the printing plate, because they move as one body. So a measurement of the angular velocity of the shaft is equivalent to a measurement of the angular velocity of the shaft.

The angular measuring means may be present at a drive rotating the shaft.

The angular measuring means may be an accelerometer on the shaft or a trip counter such as a piezo-element or optical detection of a trip. The skilled person would know how to determining the angular velocity of the shaft and printing plate.

The information of the angular velocity of the shaft is useful as it enables the cleaning apparatus to operate closer to the laser threshold values without the risk of exciding these values.

As an example if a pulsed laser is used and the laser threshold value is equivalent to a three pulses per second per area, then the repetition rate may be controlled such that the same area will not get more than two pulses per second per area.

This will further increase the cleaning speed of the printing plate.

The object of the invention is achieved by a cleaning apparatus for cleaning printing plates. The apparatus comprises a shaft extending substantially horizontal about an axis. The shaft is configured for receiving and supporting a printing plate during operation. The shaft is rotatably supported at a support end and connected to a drive for a rotation about the axis in a rotational direction. The shaft has an opposite end that is free and for receiving a printing plate along the axis.

The apparatus further comprises a laser arrangement. The laser arrangement comprises a laser arranged with laser guidance means for guiding a laser beam onto a path on the printing plate during operation.

The laser may be a CO2-laser, or a Nd:Yag-laser, or a diode laser, or an excimer laser, or a combination of one or more of these.

The laser may be a plurality of diode lasers having different or the same emission spectrums.

The laser guidance means may be one or more mirrors and/or one or more optical fibres and/or mechanical moving the laser and/or a lens and/or mirror and/or a fibre.

The cleaning of the printing plates may be by evaporating the residues of ink or by the photo effect or a combination.

The shaft connects to the printing plate at least at both ends of the printing plate.

Various printing plates may have different curvatures and thus different radiuses or different lengths, so a substantially circular element may be used to make an improve connection i.e. increase the friction between the shaft and printing plate. The purpose of the connection is to retain the printing plate during rotation.

A strong connection between the shaft and the printing plate enables that the printing plate may be rotated faster compared to other laser cleaning systems, where the printing plate is rotated by bearings at each end of the printing plate or along the printing plate.

The increased rotation speed enables the laser arrangement to interact with a larger area per time compared to the prior art. Thus, the power output of the laser arrangement may be increased by a factor comparable to the increased rotational speed, while maintaining the same intensity i.e. average power per area on the printing plate.

It is important to notice that there is a difference between the intensity of the laser at the point where the laser hits the printing plate and the intensity experienced by printing plate. The printing plate will due to the rotation experience an intensity which is smaller than the laser intensity. When using the term intensity in this application we will be referring to the intensity experienced by the printing plate.

This effect is important because if the intensity exceeds a threshold value the printing plate may be damage.

In an aspect the guidance means for guiding a laser beam may be adapted for forming the path below a horizontal plane through the axis.

The laser cleaning will cause particles to be removed from the surface of the printing plate. When the path is below a horizontal plane the particles will be force downwards and this will ease the cleaning as less material will move around in the chamber.

The cleaning apparatus may be equipped with a vacuum for collection and removal of particles during operation.

The vacuum may be substantially positioned below the printing plate in a tangential plane defined by an attack point of the laser beam on the printing plate.

Thereby fewer particles may settle on the printing plate.

In an aspect the rotational direction at the path is away from the laser arrangement.

This will lower the risk of particles settling on the laser arrangement as particles will forced away from the laser arrangement.

In an aspect the laser guidance means is adapted for forming an angle between the laser beam and a normal to the path in the range of 0-60 degrees.

This may further lessen the containment of the laser arrangement as the laser arrangement may be offset relative to the path in a vertical direction.

In an aspect the shaft at the opposite end is supported by a movable arrangement.

The arrangement is movable such that the shaft may receive a printing plate along the axis.

The printing plates may in some cases be so large and thereby heavy, that the shaft needs further support at the opposite end to avoid being damaged during rotation.

The arrangement may be a bearing arrangement.

In an aspect the cleaning apparatus further comprises a shaft end support part. The support is configured to engage with the opposite end and a printing plate.

This may further reduce the risk of the shaft and printing plate being damaged during rotation.

In an aspect the cleaning apparatus may further comprise a controller. The controller may have means for adapted to execute the acts of the method of laser cleaning a printing plate in a cleaning apparatus.

The controller may control the laser arrangement comprising the laser and the laser guiding means.

The controller may further control the drive for controlling the rotational speed of the shaft.

The effect of a controller, which is connected to the laser arrangement and the drive, is that the intensity at the printing plate may be pushed closer to the threshold value. Thereby, the time needed for cleaning the apparatus is reduced as much as possible. There are different ways the printing plate can be damaged by the laser beam. One way is due to an increase in temperature. This can be mitigated by making a path where the laser beam moves back and forth on the printing plate along the axis, such that the printing plate may cool between each passage of the laser beam.

The effect being that the power output of the laser may be increased further and thus the cleaning time may be decreased further.

The shaft and the printing plate are connected such that the printing plate will not drift relative to the shaft i.e. they rotate as one body.

In an aspect the cleaning apparatus may further have angular measuring means for determining the angular velocity of the shaft

The drive may be able to precisely determine an angular velocity of the shaft and thereby the printing plate. This enables the controller to move the laser beam such that the path will overlap as little as possible, thereby ensuring a more efficient cleaning.

An object is achieved by a computer program, which comprises instructions to cause the cleaning apparatus to execute the acts of the method of laser cleaning a printing plate in a cleaning apparatus.

An object is achieved by a computer-readable medium having stored thereon the computer program.

### Description of the Drawing

Fig. 1 illustrates a cleaning apparatus;
Fig. 2 illustrates a second embodiment cleaning apparatus;

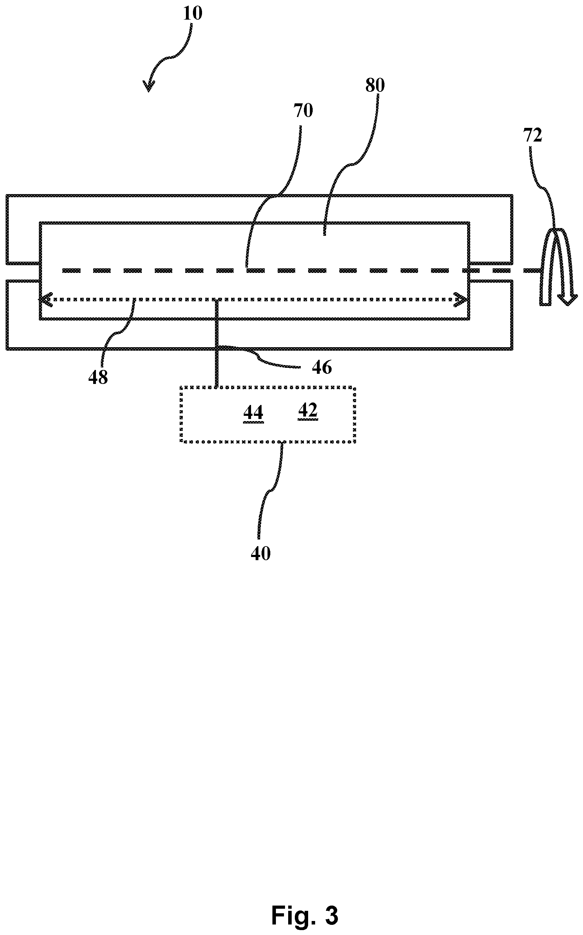

Fig. 3 illustrates a third embodiment of a cleaning apparatus;
Fig. 4 illustrates SEM images of an anilox roller with no ink and an anilox roller with black ink - unprocessed;

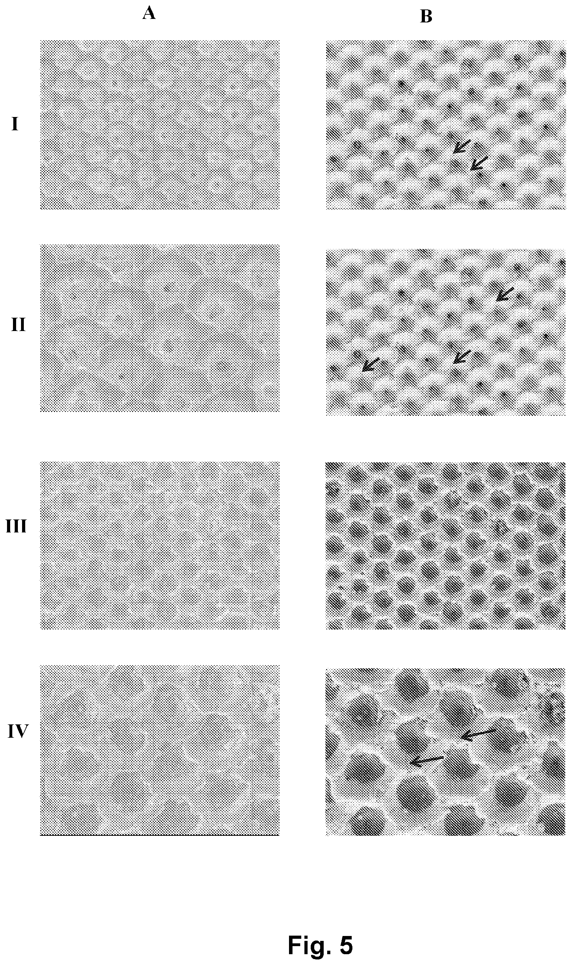

Fig. 5 illustrates SEM images of an anilox roller with no ink and an anilox roller with black ink cleaned with nanosecond laser pulses - nanoseconds single pass;

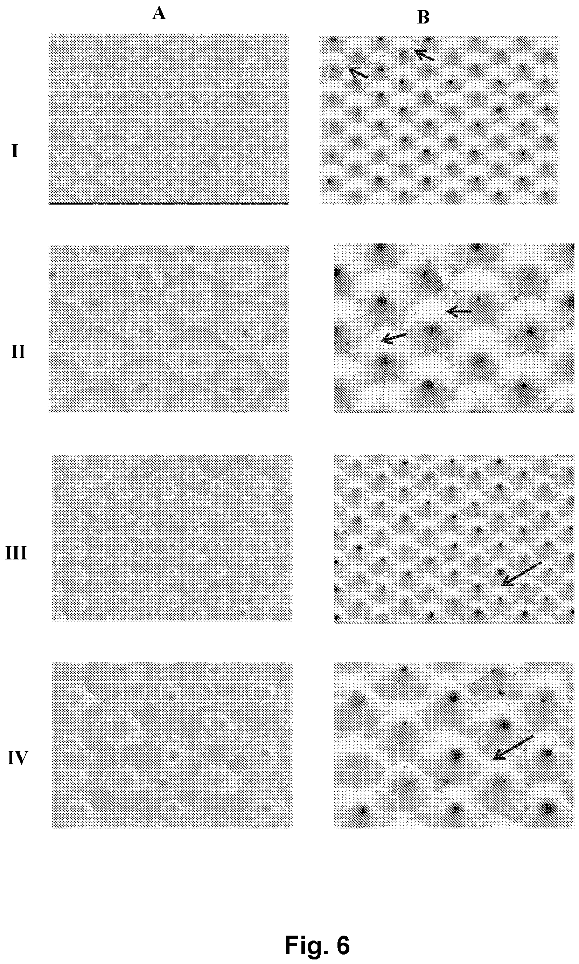

Fig. 6 illustrates SEM images of an anilox roller with no ink and an anilox roller with black ink cleaned with nanosecond laser pulses - nanoseconds 10 passes;

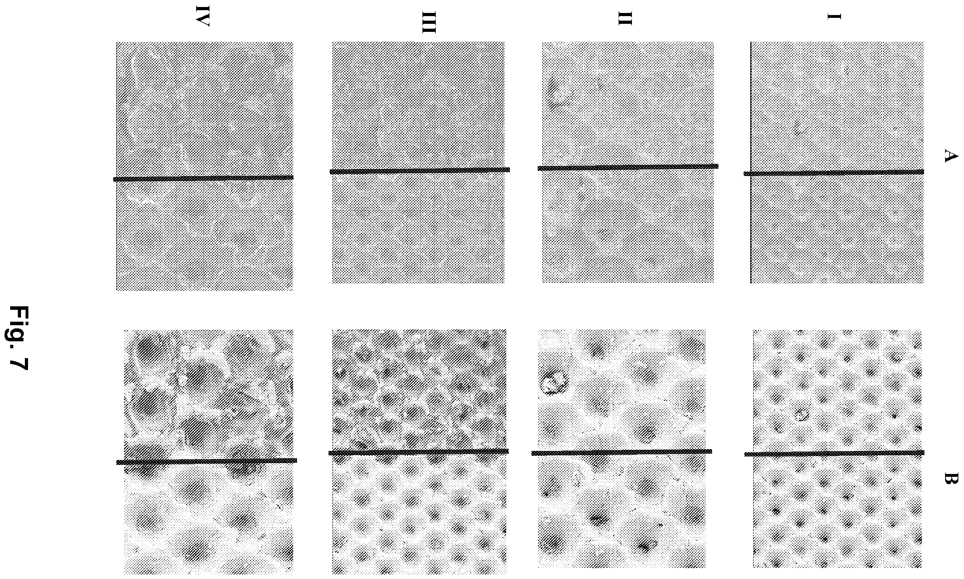

Fig. 7 illustrates SEM images of an anilox roller with no ink and an anilox roller with black ink cleaned with picosecond laser pulse - picoseconds 100 passes;

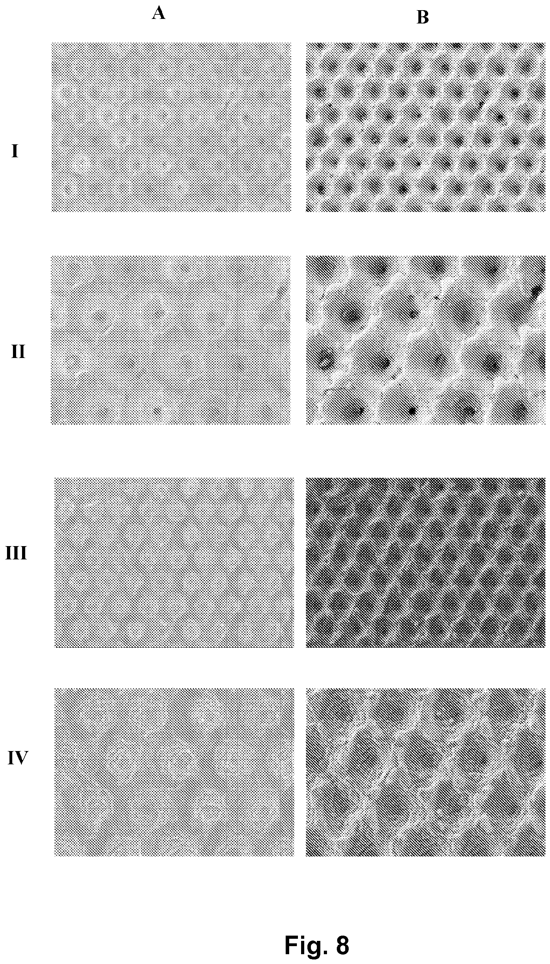

Fig. 8 illustrates SEM images of an anilox roller with no ink and an anilox roller with black ink subjected to a single pass of picosecond laser pulses - picoseconds single pass: and

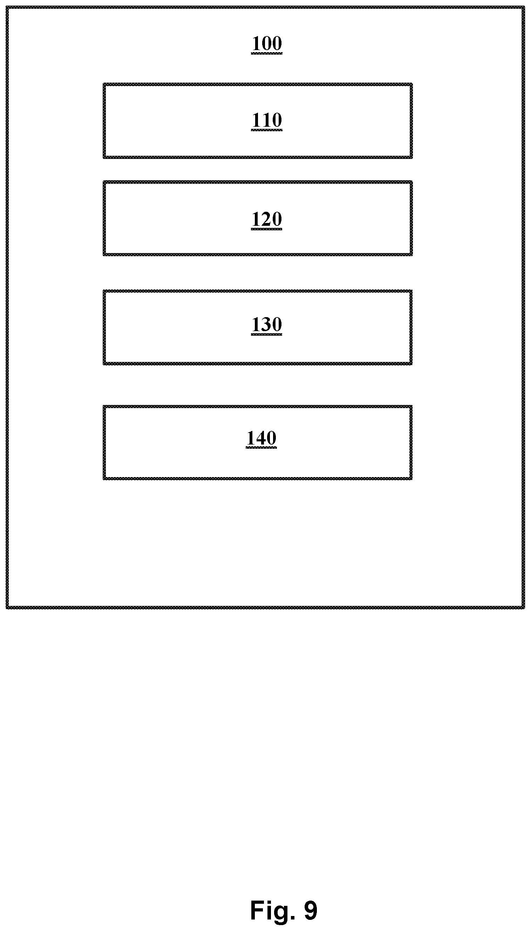

Fig. 9 illustrates the method of of laser cleaning a printing plate.

### Items

| | |
|---|---|
| Cleaning apparatus | 10 |
| Shaft | 20 |
| Support end | 22 |
| Movable arrangement | 28 |
| Drive | 30 |
| Laser arrangement | 40 |
| Laser | 42 |
| Laser guidance means | 44 |
| Laser pulses/Laser beam | 46 |
| Path | 48 |
| Axis | 70 |
| Rotational direction | 72 |
| Printing plate | 80 |
| Method | 100 |
| Rotating | 110 |
| Generating | 120 |
| Guiding | 130 |
| Adjusting | 140 |

### Detailed Description of the Invention

Fig. 1 illustrates a schematic of a cleaning apparatus 10. The cleaning apparatus 10 comprises a shaft 20, which extends substantially horizontal about an axis 70. The shaft is configured for receiving and supporting a printing plate 80 during operation.

The shaft 20 is rotatably supported at a support end 22 and connected to a drive 30 for a rotation about the axis 70 in a rotational direction 72. The shaft 20 has an opposite end 24 that is free for receiving a printing plate 80 along the axis 70.

The cleaning apparatus 10 further comprises a laser arrangement 40, which comprises a laser 42 arranged with laser guidance means 44 for guiding a laser beam 46 onto a path 48 on the printing plate 80 during operation.

The shown path 48 is the point on which the laser beam hits the printing plate 80 along the axis 70. The shaft 20 and printing plate 80 rotates as one body and thereby the laser beam 46 may cover the entire printing plate 80 at each point along the path 48.

Fig. 2 illustrates a schematic of another cleaning apparatus 10. The cleaning apparatus 10 comprises a shaft 20, which extends substantially horizontal about an axis 70. The shaft is configured for receiving and supporting a printing plate 80 during operation. The shaft 20 is rotatably supported at a support end 22 and connected to a drive 30 for a rotation about the axis 70 in a rotational direction 72. The shaft 20 has an opposite end 24 that is free for receiving a printing plate 80 along the axis 70.

The cleaning apparatus 10 further comprises a laser arrangement 40, which comprises a laser 42 arranged with laser guidance means 44 for guiding a laser beam 46 onto a path 48 on the printing plate 80 during operation.

The shown path 48 is the point on which the laser beam hits the printing plate 80 along the axis 70. The shaft 20 and printing plate 80 rotates as one body and thereby the laser beam 46 may cover the entire printing plate 80 at each point along the path 48.

The path 48 may move back and for the along the axis, such that the printing plate 80 has time to cool or such that the ablated material can diffuse away from the printing plate 80.

Fig. 3 illustrates a third embodiment of a cleaning apparatus 10. The cleaning apparatus 10 comprises two rotatable cylinders on which a printing plate 80 is arranged. The rotatable cylinders rotate the printing plate 80. This particular setup is well known to the person skilled in the art.

The cleaning apparatus 10 further comprises a laser arrangement 40, which comprises a laser 42 arranged with laser guidance means 44 for guiding a laser beam 46 onto a path 48 on the printing plate 80 during operation.

The shown path 48 is the point on which the laser beam hits the printing plate 80 along the axis 70. The shaft 20 and printing plate 80 rotates as one body and thereby the laser beam 46 may cover the entire printing plate 80 at each point along the path 48.

The path 48 may move back and for the along the axis, such that the printing plate 80 has time to cool or such that the ablated material can diffuse away from the printing plate 80.

Fig. 4 illustrates SEM images of an unprocessed (i.e. not cleaned) anilox roller with no ink and an anilox roller with black ink.

The figure shows the anilox roller with no ink and the anilox roller with black ink using two different SEM detectors.

Column A shows images using Inlens, which is used for topographic information.

Column B shows images using secondary electron (SE2) which show morphology of the area.

I and III is a 500x magnification of the anilox roller with no ink and the anilox roller with black ink, respectively.

II and IV is a 1000x magnification of the anilox roller with no ink and the anilox roller with black ink, respectively.

Cracks are visible in the no ink sample presumably from the re-solidification of the material after being machined or due to mechanical stress during the lifetime of the roller.

Fig 5 (nanoseconds single pass) illustrates SEM images of an anilox roller with no ink and an anilox roller with black ink cleaned with nanosecond laser pulses. The SEM images are taking of surface areas which have been subjected to a single (i.e. 1) pass.

Experiments of nanosecond pulse were made using: 200 ns, 75 ns, 50 ns and 25 ns pulse duration. Scanning speeds of 1,500, 1,000, 500 and 100 mm s-1. Power of 1, 5 and 10 W; the only fixed parameter for the trial was a repetition rate being 25 kHz.

In example the best results were found for the following settings. The laser system used for cleaning the anilox rollers generated pulses with pulse duration of 50 ns and scanned the surface at a speed of 500 mm s⁻¹ and the power was 1 W and the repetition rate was 25 kHz.

The figure shows the anilox roller with no ink and the anilox roller with black ink using two different SEM detectors.

Column A shows images using Inlens, which is used for topographic information.

Column B shows images using secondary electron (SE2) which show morphology of the area.

I and III is a 500x magnification of the anilox roller with no ink and the anilox roller with black ink, respectively.

II and IV is a 1000x magnification of the anilox roller with no ink and the anilox roller with black ink, respectively.

Samples BI and BII shows cracks (see arrows).

Samples BIV show melted surfaces (see arrows) as compared to figure 4 BII.

Thus even for a single pass of a nanosecond (SOns) laser pulse there are noticeable changes in the surface of the anilox roller.

Fig. 6 (nanoseconds 10 passes) illustrates SEM images of an anilox roller with no ink and an anilox roller with black ink cleaned with nanosecond laser pulses. The SEM images are taking of surface areas which have been subjected to ten passes.

The laser system used for cleaning the anilox rollers generated pulses with pulse duration of 50 ns and scanned the surface at a speed of 500 mm s⁻¹ and the power was 1 W and the repetition rate was 25 kHz.

The figure shows the anilox roller with no ink (I,II) after laser treatment and the anilox roller with black ink (II, IV) after laser treatment using two different SEM detectors,

Column A shows images using Inlens, which is used for topographic information.

Column B shows images using secondary electron (SE2) which show morphology of the area.

I and III is a 500x magnification of the anilox roller with no ink and the anilox roller with black ink, respectively.

II and IV is a 1000x magnification of the anilox roller with no ink and the anilox roller with black ink, respectively.

Surface modification is visible in all cases, more so in black ink samples, resulting in change of geometry of the pockets.

The anilox roller with no ink, i.e. I, II, shows clear signs of cracks as indicated by arrows. Inspection of the images shows many more cracks than indicated by the arrows.

The black ink sample, i.e. III, IV, shows a smoother surface (see arrows) after ten passes negatively affecting the performance of ink delivery. The increased smoothing of the surface is probably due to a higher absorption of the beam with the black ink.

No mechanical tests were performed of the two anilox rollers, but there is an indication of heat affected zones i.e. melting, re-solidification and cracks. It is clear the black ink had a high absorption as there is significant melting present, which changes the geometry of the pockets.

Fig. 7 (picosecond 100 passes) illustrates SEM images of an anilox roller with no ink and an anilox roller with black ink cleaned with picosecond laser pulse.

All the images presented are shown with the left part being an untreated area and the right-hand side showing the cleaning process after 100 passes. The cleaning process is more evident in the black sample as the ink has been completely removed and there is no damage in the substrate.

The SEM images are taking of surface areas which have been subjected to 100 passes.

Column A shows images using Inlens, which is used for topographic information.

Column B shows images using secondary electron (SE2) which show morphology of the area.

I and III is a 500x magnification of the anilox roller with no ink and the anilox roller with black ink, respectively.

II and IV is a 1000x magnification of the anilox roller with no ink and the anilox roller with black ink, respectively.

The SEM images show an increase in dimples, which increases the transfer volume, at the bottom of the structures and there is no damage or melting visible.

Comparing the untreated area (the left sides) with laser treated area show no induction of cracks.

The surface of the anilox rollers where examined with SEM after one single pass. The SEM images are shown in Fig. 8, where the black ink anilox roller showed a change in morphology of the ink and the surface looks rougher as the laser-ink interaction takes place.

This showed that the picosecond laser pulses for ink removal are selective compared to the nanosecond laser pulses, where after a single pass the anilox material started to melt.

Multiple passes 10, 20, 100 were made and no visible damage could be detected on the substrate. Fig. 6 shows the anilox roller surface after 100 passes and shows no visible damage.

Thus, successful laser cleaning was achieved with the picosecond laser with no evidence of damage from multiple laser passes.

Fig. 8 (picosecond one pass) illustrates SEM images of an anilox roller with no ink and an anilox roller with black ink subjected to a single pass of picosecond laser pulses.

The SEM images are taking of surface areas which have been subjected to 1 pass.

Column A shows images using Inlens, which is used for topographic information.

Column B shows images using secondary electron (SE2) which show morphology of the area.

I and III is a 500x magnification of the anilox roller with no ink and the anilox roller with black ink, respectively.

II and IV is a 1000x magnification of the anilox roller with no ink and the anilox roller with black ink, respectively.

The surface of the anilox rollers where examined with SEM after one single pass. The SEM images show that the black ink anilox roller, i.e. III, IV, had a change in morphology of the ink and the surface looks rougher as the laser-ink interaction takes place.

The underlying anilox roller was not visible after a single pass.

This shows that the picosecond laser pulses for ink removal, i.e. III, IV, are selective compared to the nanosecond laser pulses, see figures 5 and 6, where after a single pass the anilox material started to melt.

The same applies for the no ink samples, i.e. I, II, showing no signs of induced cracks or melting.

Fig. 9 illustrates a method 100 of of laser cleaning a printing plate 80.

The method 100 comprises one or more acts of generating 120 picosecond laser pulses 46. There is an act of guiding 130 the laser pulses 46 onto a path 48 on the printing plate 80. There is an act of generating 120 the laser pulses 46 with a repetition rate between 1-180 kHz, 10-180 kHz, 20-120 kHz, 40-80 kHz or 40-60kHz. There is an act of guiding 130 the laser pulses 46 with a path speed of5-5000 mm/s, 50-4000 mm/s, 500-3000 mm/s, 1000-2500 mm/s or 2000 mm/s. There is an act of adjusting 140 the laser pulses 46 to an average intensity between 500-3600 W/m² on the printing plate 80. There is an act of rotating 110 the printing plate 80.

The laser pulses 46 may have a pulse wavelength between 800-1200 nm.

The path 48 may pass each surface area of the printing plate 80 two or more times.

## Claims

1. A method (100) for laser cleaning ink from a anilox roller (80) in a cleaning apparatus (10), the method (100) comprising following acts of:
- generating (120) picosecond laser pulses (46) with a pulse duration between 1-1000 ps at a laser (42);
- guiding (130) the laser pulses (46) onto a path (48) on the anilox roller (80).

2. The method (100) according to claim 1, the method (100) comprising an act of:
- generating (120) the picosecond laser pulses (46) with a pulse duration between 1-100 ps or 1-250 ps or 1-800 ps.

3. The method (100) according to claim 1, the method (100) comprising an act of:
- generating (120) the picosecond laser pulses (46) with a pulse duration of about 50 ps, such as between 25-100 ps.

4. The method (100) according to claim 1, 2 or 3, wherein the laser pulses (46) have a pulse wavelength between 800-1200 nm.

5. The method (100) according to claim 1, the method (100) comprising an act of:
- generating (120) the picosecond laser pulses (46) with a pulse duration about 10 ps and a pulse wavelength of 1064 nm.

6. The method (100) according to one or more of claims 1-5, the method (100) further comprising one or more acts of:
- generating (120) the laser pulses (46) with a repetition rate between 1-180 kHz, 10-180 kHz, 20-120 kHz, 40-80 kHz or 40-60kHz;
- guiding (130) the laser pulses (46) with a path speed of 5-5000 mm/s, 50-4000 mm/s, 500-3000 mm/s, 1000-2500 mm/s or 2000 mm/s;
- adjusting (140) the laser pulses (46) to an average intensity between 500-3600 W/m² on the anilox roller (80);
- rotating (110) the anilox roller (80).

7. The method (100) according to one or more of claims 1-6, wherein the path (48) passes each surface area of the anilox roller (80) two or more times.

8. A cleaning apparatus (10) for cleaning an anilox roller (80), the cleaning apparatus (10) comprising
- a laser arrangement (40) comprising a pulsed laser (42), and
- laser guidance means (44) for guiding the laser pulses (46) onto a path (48) on a anilox roller (80),
- means for rotating the anilox roller (80), **characterised in that**
- the pulsed laser (42) is a pulsed picosecond laser for generating picosecond laser pulses (46) having a pulse duration between 1-1000 ps.

9. The cleaning apparatus (10) according to claim 8, wherein the laser pulses (46) has a pulse duration between 1-100 ps.

10. The cleaning apparatus (10) according to claim 8, wherein the laser pulses (46) has a pulse duration of about 50 ps, such as between 25-100 ps.

11. The cleaning apparatus (10) according to claim 8, 9 or 10, wherein the pulsed laser generates laser pulses having a wavelength of 800-1200 nm.

12. The cleaning apparatus (10) according to claim 8, wherein the laser pulses (46) has a pulse duration about 10 ps and a pulse wavelength of 1064 nm.

13. The cleaning apparatus (10) according to one or more of claims 7-12, wherein the laser guidance means (44) guides the laser pulses (46) with a path speed 5-5000 mm/s, 50-4000 mm/s, 500-3000 mm/s, 1000-2500 mm/s or 2000 mm/s.

14. A cleaning apparatus (10) according to one or more of claims 7-13, wherein the cleaning apparatus (10) comprises a shaft (20) extending substantially horizontal about an axis (70) and configured for receiving and supporting a anilox roller (80) during operation, the shaft (20) is rotatably supported at a support end (22) and connected to a drive (30) for a rotation about the axis (70) in a rotational direction (72), the shaft (20) has an opposite end (24) that is free for receiving a anilox roller (80) along the axis (70).

15. The cleaning apparatus (10) according to one or more of claims 7-14, wherein the cleaning apparatus further comprises a controller having means for executing the acts of the method (100) according to one or more of claims 1-7.

16. A computer program comprising instructions to cause the cleaning apparatus (10) according to claim 15 to execute the acts of the method (100) according to one or more of claims 1-7.

17. A computer-readable medium having stored thereon the computer program of claim 16.

18. Use of a picosecond laser pulse with a pulse duration between 1-1000 ps for cleaning ink from a anilox roller (80).

## Patentansprüche

1. Verfahren (100) zum Reinigen von Laserfarbe von einer Rasterwalze (80) in einer Reinigungsvorrichtung (10), wobei das Verfahren (100) folgende Schritte umfasst:
- Erzeugen (120) von Pikosekunden-Laserpulsen (46) mit einer Pulsdauer zwischen 1-1000 ps an einem Laser (42);
- Führen (130) der Laserpulse (46) auf eine Bahn (48) auf der Rasterwalze (80).

2. Verfahren (100) nach Anspruch 1, wobei das Verfahren (100) Folgendes umfasst:
- Erzeugen (120) der Pikosekundenlaserimpulse (46) mit einer Impulsdauer zwischen 1-100 ps oder 1-250 ps oder 1-800 ps.

3. Verfahren (100) nach Anspruch 1, wobei das Verfahren (100) Folgendes umfasst:
- Erzeugen (120) der Pikosekundenlaserimpulse (46) mit einer Impulsdauer von etwa 50 ps, wie zwischen 25-100 ps.

4. Verfahren (100) nach Anspruch 1, 2 oder 3, wobei die Laserpulse (46) eine Pulswellenlänge zwischen 800-1200 nm aufweisen.

5. Verfahren (100) nach Anspruch 1, wobei das Verfahren (100) Folgendes umfasst:
- Erzeugen (120) der Pikosekunden-Laserpulse (46) mit einer Pulsdauer von etwa 10 ps und einer Pulswellenlänge von 1064 nm.

6. Verfahren (100) nach einem oder mehreren der Ansprüche 1-5, wobei das Verfahren (100) ferner einen oder mehrere der folgenden Akte umfasst:
- Erzeugen (120) der Laserpulse (46) mit einer Repetitionsrate zwischen 1-180 kHz, 10-180 kHz, 20-120 kHz, 40-80 kHz oder 40-60 kHz;
- Führen (130) der Laserpulse (46) mit einer Bahngeschwindigkeit von 5-5000 mm/s, 50-4000 mm/s, 500-3000 mm/s, 1000-2500 mm/s oder 2000 mm/s;
- Einstellen (140) der Laserpulse (46) auf eine mittlere Intensität zwischen 500-3600 W/m² auf der Rasterwalze (80);
- Drehen (110) der Rasterwalze (80).

7. Verfahren (100) nach einem oder mehreren der Ansprüche 1-6, wobei die Bahn (48) jeden Oberflächenbereich der Rasterwalze (80) zwei oder mehr Male passiert.

8. Reinigungsvorrichtung (10) zum Reinigen einer Rasterwalze (80), wobei die Reinigungsvorrichtung (10) umfasst:
- eine Laseranordnung (40) umfassend einen gepulsten Laser (42), und
- Laserführungsmittel (44) zum Führen der Laserpulse (46) auf eine Bahn (48) auf einer Rasterwalze (80),
- Einrichtung zum Drehen der Rasterwalze (80), **dadurch gekennzeichnet, dass**
- der gepulste Laser (42) ein gepulster Pikosekunden-Laser zur Erzeugung von Pikosekunden-Laserpulsen (46) mit einer Pulsdauer zwischen 1-1000 ps ist.

9. Reinigungsvorrichtung (10) nach Anspruch 8, wobei die Laserpulse (46) eine Pulsdauer zwischen 1-100 ps aufweisen.

10. Reinigungsvorrichtung (10) nach Anspruch 8, wobei die Laserpulse (46) eine Pulsdauer von etwa 50 ps aufweisen, wie zwischen 25-100 ps.

11. Reinigungsvorrichtung (10) nach Anspruch 8, 9 oder 10, wobei der gepulste Laser Laserpulse mit einer Wellenlänge von 800-1200 nm erzeugt.

12. Reinigungsvorrichtung (10) nach Anspruch 8, wobei die Laserpulse (46) eine Pulsdauer von etwa 10 ps und eine Pulswellenlänge von 1064 nm aufweisen.

13. Reinigungsvorrichtung (10) nach einem oder mehreren der Ansprüche 7-12, wobei die Laserführungseinrichtung (44) die Laserpulse (46) mit einer Bahngeschwindigkeit 5-5000 mm/s, 50-4000 mm/s, 500-3000 mm/s, 1000-2500 mm/s oder 2000 mm/s führt.

14. Reinigungsvorrichtung (10) nach einem oder mehreren der Ansprüche 7-13, wobei die Reinigungsvorrichtung (10) eine Welle (20) umfasst, die sich im Wesentlichen horizontal um eine Achse (70) erstreckt und konfiguriert ist, um eine Rasterwalze (80) während des Betriebs aufzunehmen und zu lagern, wobei die Welle (20) an einem Lagerende (22) drehbar gelagert und mit einem Antrieb (30) für eine Drehung um die Achse (70) in einer Drehrichtung (72) verbunden ist, wobei die Welle (20) ein gegenüberliegendes Ende (24) aufweist, das frei ist, um eine Rasterwalze (80) entlang der Achse (70) zu lagern.

15. Reinigungsvorrichtung (10) nach einem oder mehreren der Ansprüche 7-14, wobei die Reinigungsvorrichtung ferner eine Steuerung umfasst, die Mittel zum Ausführen der Handlungen des Verfahrens (100) nach einem oder mehreren der Ansprüche 1-7 aufweist.

16. Computerprogramm, das Anweisungen umfasst, um die Reinigungsvorrichtung (10) nach Anspruch 15 zu veranlassen, die Handlungen des Verfahrens (100) nach einem oder mehreren der Ansprüche 1-7 auszuführen.

17. Computerlesbares Medium, auf dem das Computerprogramm nach Anspruch 16 gespeichert ist.

18. Verwendung eines Pikosekundenlaserimpulses mit einer Impulsdauer zwischen 1-1000 ps zum Reinigen von Tinte von einer Rasterwalze (80).

## Revendications

1. Procédé (100) de nettoyage au laser d'une encre provenant d'un rouleau anilox (80) dans un appareil de nettoyage (10), le procédé (100) comprenant les actions suivantes de :
- génération (120) d'impulsions laser picosecondes (46) d'une durée d'impulsion comprise entre 1 et 1000 ps au niveau d'un laser (42) ;
- orientation (130) des impulsions laser (46) sur un trajet (48) sur le rouleau anilox (80).

2. Procédé (100) selon la revendication 1, le procédé (100) comprenant une action de :
- génération (120) des impulsions laser picosecondes (46) avec une durée d'impulsion comprise entre 1 et 100 ps ou 1 et 250 ps ou 1 et 800 ps.

3. Procédé (100) selon la revendication 1, le procédé (100) comprenant une action de :
- génération (120) des impulsions laser picosecondes (46) avec une durée d'impulsion d'environ 50 ps, par telle que comprise entre 25 et 100 ps.

4. Procédé (100) selon la revendication 1, 2 ou 3, dans lequel les impulsions laser (46) ont une longueur d'onde d'impulsion comprise entre 800 et 1200 nm.

5. Procédé (100) selon la revendication 1, le procédé (100) comprenant une action de :
- génération (120) des impulsions laser picosecondes (46) avec une durée d'impulsion d'environ 10 ps et une longueur d'onde d'impulsion de 1064 nm.

6. Procédé (100) selon une ou plusieurs des revendications 1 à 5, le procédé (100) comprenant en outre une ou plusieurs actions de :
- génération (120) des impulsions laser (46) avec une fréquence de répétition comprise entre 1 et 180 kHz, 10 et 180 kHz, 20 et 120 kHz, 40 et 80 kHz ou 40 et 60 kHz ;
- orientation (130) des impulsions laser (46) avec une vitesse de trajet de 5 à 5000 mm/s, 50 à 4000 mm/s, 500 à 3000 mm/s, 1000 à 2500 mm/s ou 2000 mm/s ;
- ajustement (140) des impulsions laser (46) à une intensité moyenne comprise entre 500 et 3600 W/m² sur le rouleau anilox (80) ;
- rotation (110) du rouleau anilox (80).

7. Procédé (100) selon une ou plusieurs des revendications 1 à 6, dans lequel le trajet (48) passe sur chaque surface du rouleau anilox (80) deux fois ou plus.

8. Appareil de nettoyage (10) pour nettoyer un rouleau anilox (80), l'appareil de nettoyage (10) comprenant
- un agencement laser (40) comprenant un laser pulsé (42), et
- un moyen de guidage laser (44) pour guider les impulsions laser (46) sur un trajet (48) sur un rouleau anilox (80),
- un moyen de mise en rotation du rouleau anilox (80),
**caractérisé en ce que**
le laser pulsé (42) est un laser picoseconde pulsé destiné à générer des impulsions laser picosecondes (46) ayant une durée d'impulsion comprise entre 1 et 1000 ps.

9. Appareil de nettoyage (10) selon la revendication 8, dans lequel les impulsions laser (46) ont une durée d'impulsion comprise entre 1 et 100 ps.

10. Appareil de nettoyage (10) selon la revendication 8, dans lequel les impulsions laser (46) ont une durée d'impulsion d'environ 50 ps, telle que comprise entre 25 et 100 ps.

11. Appareil de nettoyage (10) selon la revendication 8, 9 ou 10, dans lequel le laser pulsé génère des impulsions laser ayant une longueur d'onde de 800 à 1200 nm.

12. Appareil de nettoyage (10) selon la revendication 8, dans lequel les impulsions laser (46) ont une durée d'impulsion d'environ 10 ps et une longueur d'onde d'impulsion de 1064 nm.

13. Appareil de nettoyage (10) selon une ou plusieurs des revendications 7 à 12, dans lequel le moyen de guidage laser (44) oriente les impulsions laser (46) avec une vitesse de trajet de 5 à 5000 mm/s, 50 à 4000 mm/s, 500 à 3000 mm/s, 1000 à 2500 mm/s ou 2000 mm/s.

14. Appareil de nettoyage (10) selon une ou plusieurs des revendications 7 à 13, dans lequel l'appareil de nettoyage (10) comprend un arbre (20) s'étendant sensiblement horizontalement autour d'un axe (70) et configuré pour recevoir et supporter un rouleau anilox (80) pendant le fonctionnement, l'arbre (20) est supporté de manière rotative au niveau d'une extrémité de support (22) et relié à un entraînement (30) pour une rotation autour de l'axe (70) dans une direction de rotation (72), l'arbre (20) a une extrémité (24) opposée qui est libre pour recevoir un rouleau anilox (80) le long de l'axe (70).

15. Appareil de nettoyage (10) selon une ou plusieurs des revendications 7 à 14, dans lequel l'appareil de nettoyage comprend en outre un dispositif de commande ayant un moyen pour exécuter les actions du procédé (100) selon une ou plusieurs des revendications 1 à 7.

16. Programme informatique comprenant des instructions pour amener l'appareil de nettoyage (10) selon la revendication 15 à exécuter les actions du procédé (100) selon une ou plusieurs des revendications 1 à 7.

17. Support lisible par ordinateur sur lequel est stocké le programme informatique selon la revendication 16.

18. Utilisation d'une impulsion laser picoseconde ayant une durée d'impulsion comprise entre 1 et 1000 ps pour nettoyer l'encre d'un rouleau anilox (80).
